# EUROPEAN PATENT SPECIFICATION

(11) **EP 3 336 025 B1**
(45) Date of publication and mention of the grant of the patent: **21.10.2020**
(21) Application number: 17206594.8
(22) Date of filing: 12.12.2017
(51) Int. Cl.: B65G 63/04, B65G 1/04, B65G 1/16, B65G 49/06

(54) **A DYNAMIC STORAGE SYSTEM**
DYNAMISCHES SPEICHERSYSTEM
SYSTÈME DE STOCKAGE DYNAMIQUE

(30) Priority: 15.12.2016 IT 201600126620
(43) Date of publication of application: 20.06.2018
(73) Proprietor: System S.p.A., 41042 Fiorano Modenese (MO) (IT)
(72) Inventor: STEFANI, Franco, 41049 Sassuolo Modena (IT)
(74) Representative: Casadei, Giovanni

(56) References cited:
- FR-A1- 2 643 887
- JP-A- S59 134 274
- NL-A- 8 403 373
- US-A- 5 816 774
- US-A1- 2008 075 569

## Description

The present invention relates to a dynamic storage system.

The invention relates in particular to storage systems or plants that envisage the depositing of items on the ground. The items may be piled up or stacked together.

The invention is particularly useful for the storage of relatively large sheet-shaped objects, for example glass, marble and ceramic sheets.

Currently, systems of this type may comprise cranes equipped with winches and gripping means that operate above the items to be moved. Alternatively to cranes, large and/or small lift trucks can be used, according to the type of items to be moved.

The sheet-shaped objects are normally stacked together in a horizontal position, and are moved by means of the devices summarised above. One drawback of the systems currently available is therefore the use of very large surface areas, in relation to the quantity of items stored.

Examples of prior art systems, which do not solve the drawback above summarized, are disclosed in documents US2008/075569 and NL8403373.

The aim of the present invention is to provide a storage system which enables the drawbacks of the currently available systems to be obviated.

An advantage of the system according to the present invention is to consistently reduce the surface area required for the storage of items, without changing the quantity of items to be stored with respect to a traditional system.

Another advantage of the system according to the present invention is that it allows the use of notably more effective gripping and movement means.

A further advantage of the system according to the present invention is that is can operate automatically.

According to the present invention there is provided a storage system according to the appended claim 1 and a modular frame according to claim 9.

Further characteristics and advantages of the present invention will become more apparent in the following detailed description of an embodiment of the present invention, illustrated by way of non-limiting example in the attached figures, in which:

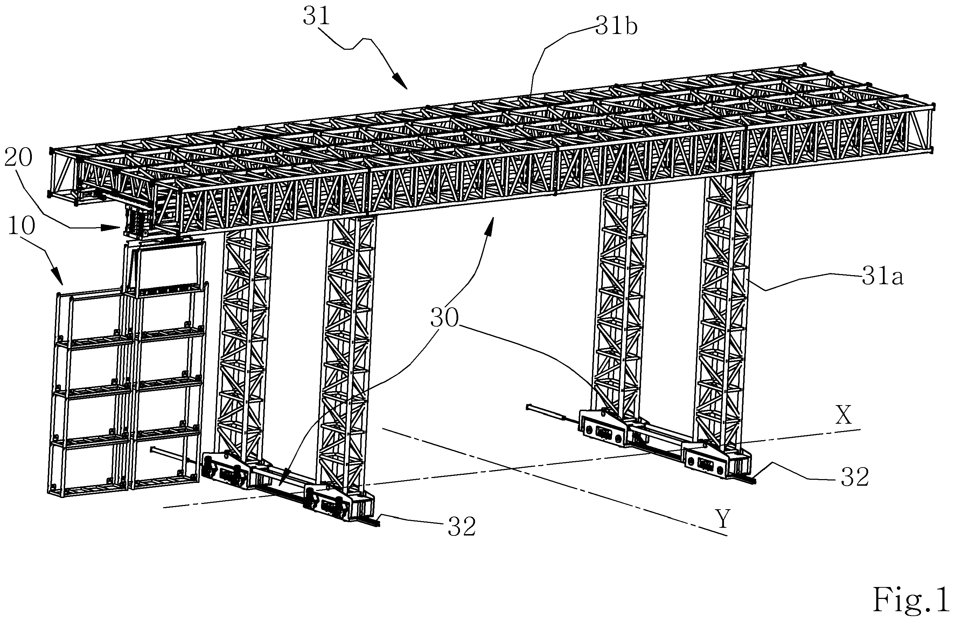

- figure 1 shows an overall schematic view of the system according to the present invention;

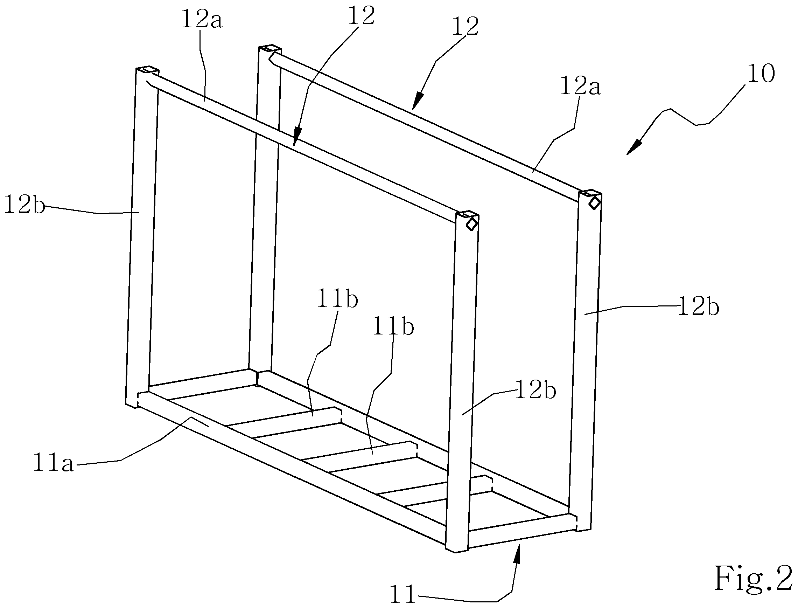

- figure 2 shows a schematic view of a modular frame (10) according to the present invention;

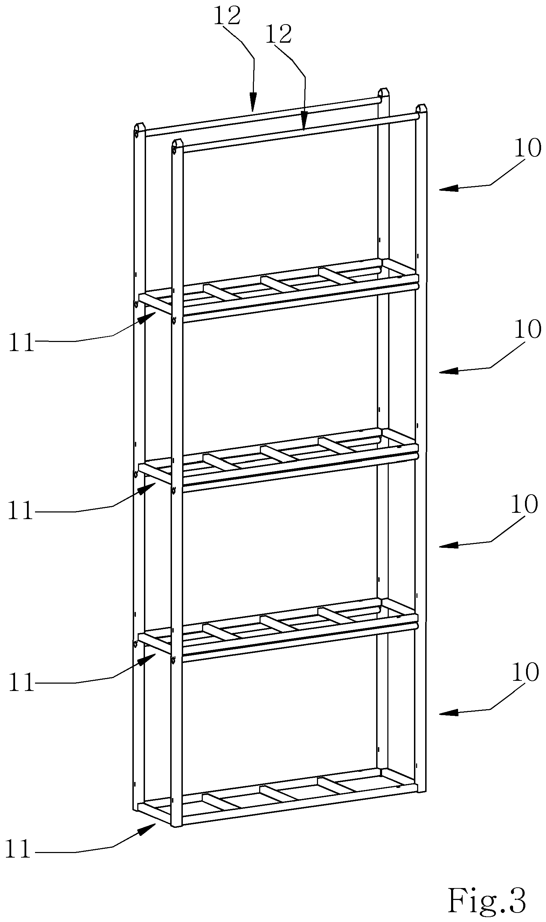

- figure 3 shows some modular frames (10) stacked together;

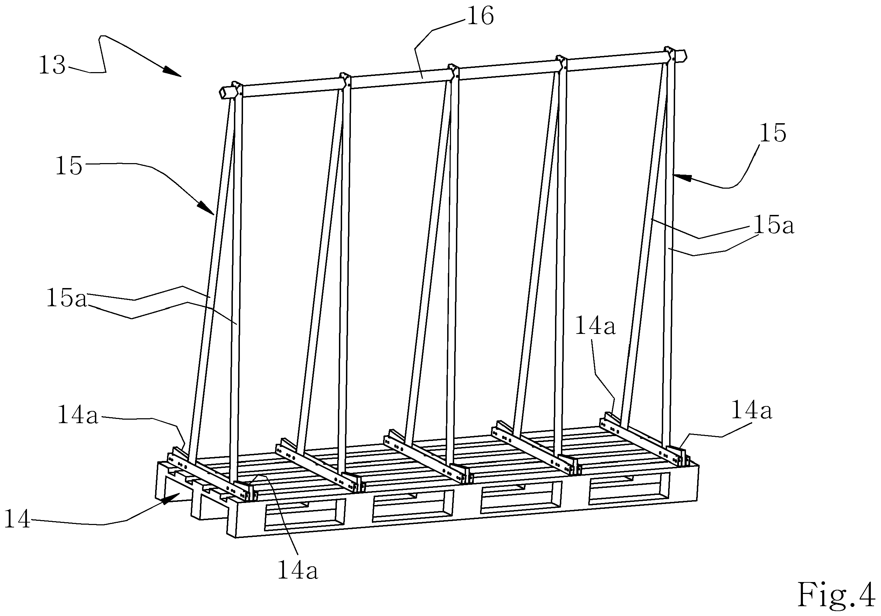

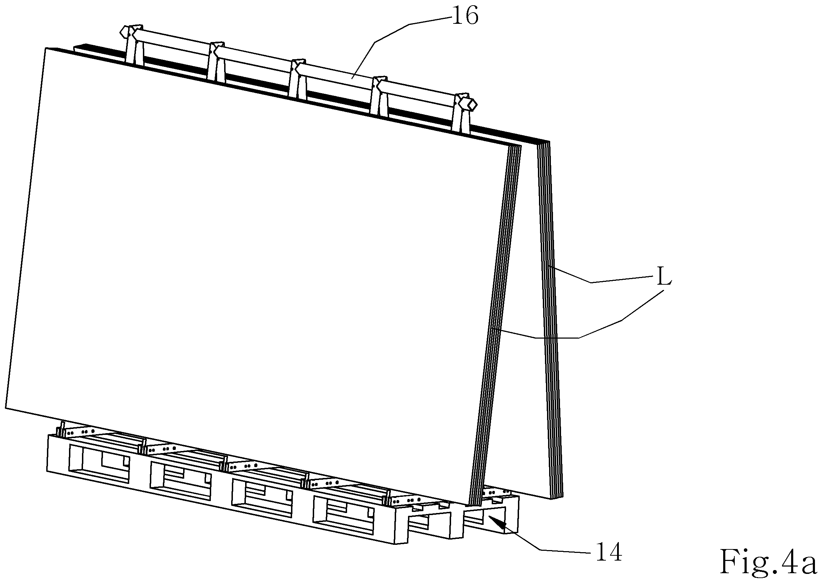

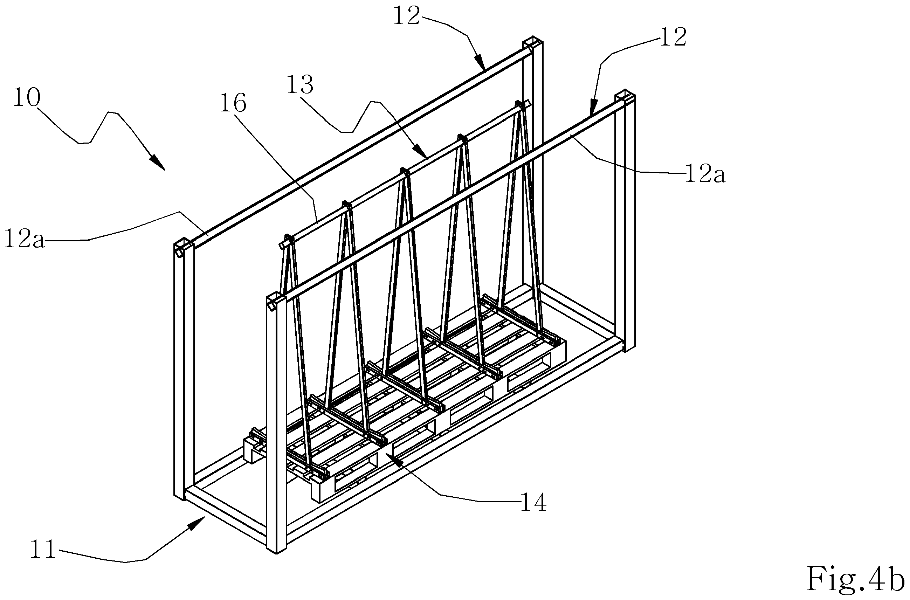

- figure 4 shows a schematic view of an internal frame (13) according to the present invention;
- figure 4a shows some sheets (L) arranged on the internal frame (13);
- figure 4b shows a modular frame (10) combined with an internal frame (13);

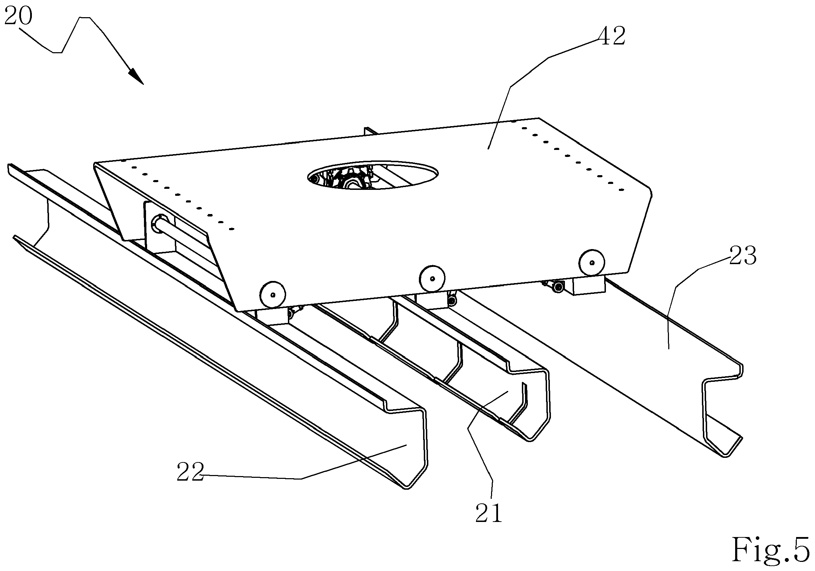

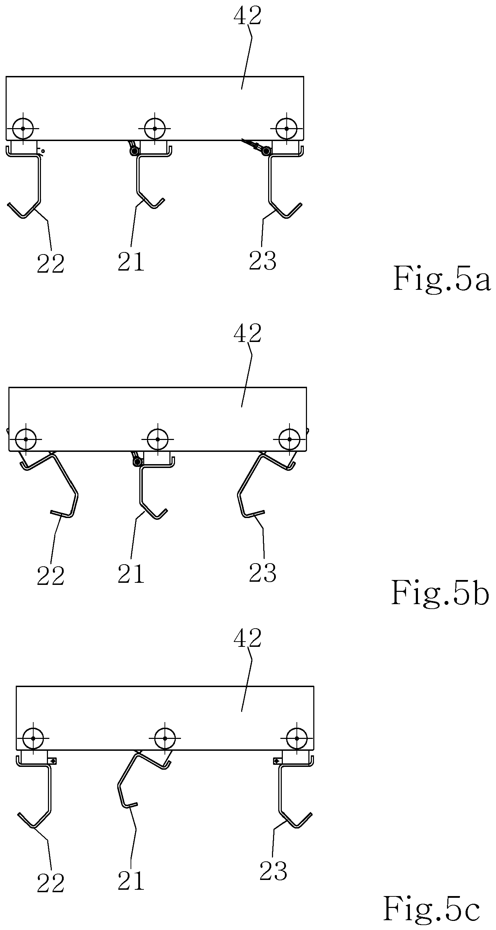

- figure 5 shows a schematic view of a gripping means (20) according to the present invention;
- figures 5a, 5b, 5c show some operating configurations of the gripping means (20);

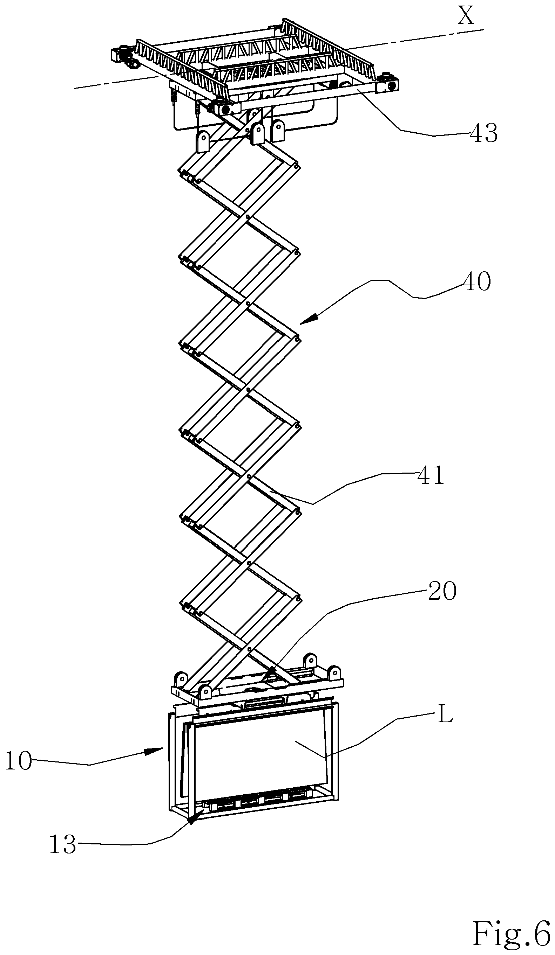

- figure 6 shows a schematic view of the gripping means (20), combined with a support structure (40).

The storage system according to the present invention comprises a plurality of modular frames (10), which can be vertically stacked on top of one another. The modular frames (10) are intended to contain a determined number of items. The modular frames (10) substantially allow ordered and stable piles to be formed, in which the items to be stored are contained. The structure of the modular frames (10) substantially allows the items to be arranged in vertical piles, reducing the total surface area necessary for the storage of the items.

Furthermore, the structure of the modular frames (10), which allows stable piles to be formed, does not require the presence of further support structures. In practice, thanks to the structure of the modular frames (10), the storage system according to the present invention does not require the presence of shelves or other load-bearing structures for the items. This means that the system can be extended or reduced as needed, simply by increasing or reducing the number, or changing the layout, of the modular frames (10).

To allow the formation of stable piles, the modular frames (10) are provided with stacking connectors that prevent movements in the horizontal direction between the superimposed modular frames (10). For example, each modular frame (10) may be provided with pins and seats, arranged in an upper zone and a lower zone, conformed to be coupled with corresponding seats and pins of an upper frame (10) and of a lower frame (10). Such connectors are not illustrated in detail as they are within the scope of knowledge of a person skilled in the art.

Preferably each modular frame (10) is made of a lattice structure, defined by a plurality of profiled elements connected to one another. For example, each modular frame (10) comprises a bottom portion (11) and at least two lateral walls (12) opposite one another. Both the bottom portion (11), and the lateral walls (12) are defined by a plurality of profiled elements, for example in tubular form, connected to one another.

The bottom portion (11) allows the modular frame (10) to be rested on the ground or on an underlying modular frame (10). For that purpose, the bottom portion (11) may be provided with seats for housing pins or pivots solidly constrained to an underlying modular frame (10). In the embodiment represented, the bottom portion (11) comprises two longitudinal members (11a) connected to one another by a plurality of cross members (11b).

Each lateral wall (12) comprises an upper portion (12a), which can be defined, for example, by a longitudinal profile (12a) joined to two uprights (12b). The lower portion (11) of a modular frame (10) may be arranged resting on the upper portion (12a) of an underlying frame (10), for example on the upper ends of the uprights (12b) and/or on the longitudinal profiles (12a). The upper portion (12a) of each frame (10) can be coupled by gripping means (20) which are illustrated in more detail in the description below.

According to the invention each modular frame (10) comprises an internal frame (13), structured to allow the support of at least one sheet (L) in an inclined position with respect to the vertical. Preferably, the internal frame (13) allows the support of one or more sheets (L) in a substantially vertical position. The use of the internal frame (13) therefore allows the sheets (L) to be contained in a particularly advantageous position that notably reduces the required plan dimensions.

According to the invention, each internal frame (13) can be removed from its own modular frame (10). This allows greater flexibility of movement of the items stored and facilitates the extraction of the items from the modular frames (10).

Each internal frame (13) comprises a base (14), structured to allow the modular frame (10) to be rested on the ground or on the bottom portion (11), with which at least one support wall (15) is associated, arranged with an inclined orientation with respect to the vertical. The support wall (15) is structured to allow the support of the sheets (L) in the desired position. In a possible embodiment, the support wall (15) is defined by a plurality of profiles (15a) arranged coplanar to one another on the orientation plane of the sheets (L).

The base (14) comprises an upper surface (14a) which is joined to the support wall (15) and is inclined upwards in order to promote the support of the sheets (L) on the support wall (15). In the embodiment represented, the upper surface (14a) is defined by a plurality of wedges whose vertex faces the support wall (15).

In the embodiment shown, the internal frame (13) comprises two support walls (15), symmetrical to one another, arranged to form a wedge with their apex facing upwards. The base (14) comprises two upper surfaces (14a) symmetrical to one another and arranged as described above with respect to a respective support wall (15).

Whether it comprises one or whether it comprises two support walls (15), the internal frame (13) comprises an upper portion (16), that can be coupled by the gripping means (20). The upper portion (16), for example, comprises a profiled element (16), connected to the support wall(s) (15).

As already indicated, the gripping means (20) is provided to be able to grasp and lift or lower the modular frames (10). For that purpose, the gripping means (20) is movable along a vertical direction between an upper position and a lower position. In the lower position, the collecting or the release of a modular frame (10), containing an internal frame (13), or of an internal frame (13) only without a modular frame (10), or even of a modular frame (10) without an internal frame (13), can take place. The collecting or release can take place both on the ground and at the top of a pile of modular frames (10). In the upper position of the gripping means (20) it is instead possible to transport the modular frame (10) or the internal frame (13) along a horizontal direction, above the other modular bodies (10) stacked inside the storage system.

In the embodiment shown, the gripping means (20) comprises a first coupling element (21), structured to couple the upper portion (16) of an internal frame (13). For example, the first coupling element (21) comprises a profile that has an open cross section with an overall C-shaped conformation. Preferably, the cross section of the first coupling element (21) is, at least in part, counter-shaped to the cross section of the profiled element (16) of the median bodies (13).

The first coupling element (21) is movable between a coupled configuration and a release configuration. In the coupled configuration, the first coupling element (21) can be arranged to surround at least partially the profiled element (16), so that the profiled element (16) is constrained to the first coupling element (21) at least with respect to a vertical movement. In the release configuration, the first coupling element (21) is not able to surround or to couple the profiled element (16).

In a particularly advantageous embodiment, the movement of the first coupling element (21) between the coupled and the release configuration takes place by rotation about an axis parallel to the longitudinal axis of the first coupling element (21) itself.

A second coupling element (22, 23) is structured to couple an upper portion (12a) of the lateral walls (12) of a modular frame (10). In a preferred embodiment, the second coupling element (22,23) comprises, for example, a pair of profiles that have an open cross section with an overall C-shaped conformation, whose concavities are facing opposite sides. Preferably, the cross sections of the two profiles (22,23) are, at least in part, counter-shaped to the cross section of the upper portions (12a) of the modular frames (10).

The second coupling element (22,23) is movable between a coupled configuration and a release configuration. In the coupled configuration, each profile (22,23) can be arranged to surround at least partially a longitudinal profile (12a) of the modular frame (10), so that the longitudinal profiles (12a) are constrained to the second coupling element (22,23) at least with respect to a vertical movement. In the release configuration, the second coupling element (22,23) is not able to surround or to couple the longitudinal profiles (12a).

In a particularly advantageous embodiment, the movement of the second coupling element (22,23) between the coupling and release configurations takes place by rotation of the two profiles (22,23) about axes parallel to the longitudinal axis of the longitudinal profiles (12a). In the release configuration, the two profiles (22,23) are at a shorter reciprocal distance than the distance that separates the two longitudinal profiles (12a). In this way, it is possible to insert or extract the two profiles (22,23) between the longitudinal profiles (12a) of the modular frame (10), for example with a vertical movement. In the coupled configuration, the two profiles (22,23) are at a longer reciprocal distance, so as to be able to surround the respective longitudinal profile (12a) of the modular frame (10) and to allow it to be raised.

The first and the second coupling elements (21,22,23) may assume different conformations, for example, they may be in the form of grippers or simple hooks, in any case structured to be able to couple a modular frame (10) and/or an internal frame (13) simultaneously or independently from one another.

The first and the second coupling elements (21,22,23) can be driven independently from one another between a coupling configuration and a release configuration. In this way, the gripping means (20) may couple either only the modular frame (10), or only the internal frame (13), or both. This allows greater flexibility of movement of the items stored and facilitates the extraction of the items from the modular frames (10).

The first and the second coupling elements (21,22,23) are associated with a suspension structure (40) movable along a vertical direction to translate the coupling elements (21,22,23) between the upper and lower positions already described above.

Such suspension structure (40) comprises a pantograph (41), driven to be compacted and extended through an appropriate actuator. For example, the actuator for driving the pantograph (41) comprises a cable and a pulley for winding and unwinding the cable. Such actuator is not described in further detail as it is within the scope of knowledge of a person skilled in the art.

A connecting element (42), for example in the form of a box, is associated with a lower end of the pantograph (41). The coupling elements (21,22,23) are associated with the connecting element (42), together with the related actuators for movements between the coupling and release positions. Such actuators are not described in further detail as they are within the scope of knowledge of a person skilled in the art.

Preferably, the suspension structure (40) may drive the first and the second coupling element (21,22,23) in rotation about a vertical axis. This allows a modular frame (10) to be rotated about a vertical axis, for example to allow passage through reduced spaces, or for any other need. The rotation of the first and the second coupling elements (21,22,23) is obtained for example through a rotation of the connecting element (42) with respect to the lower end of the pantograph (41). Alternatively, the rotation of the coupling elements (21,22,23) can be obtained by making the pantograph (41) rotate, or by combining the two rotations with one another. In all cases, each rotation can be obtained through an appropriate actuator within the scope of knowledge of a person skilled in the art.

The gripping means (20) can be translated on a horizontal plane by a translating means (30). Such translating means (30) comprises a load-bearing structure (31) movable along a first horizontal direction (Y). The load-bearing structure (31) has a portal conformation, and comprises a transversal upper part (31b) that rests on the ground by means of uprights (31a). The height of the uprights (31a) is such as to place the transversal upper part above the tallest pile of modular frames (10), so that the gripping means (20) can perform its stroke between the upper and lower positions. The uprights (31a) are slidable along guides (32) located on the ground. The guides (32) are oriented parallel to the first horizontal direction (Y). A motor means, within the scope of knowledge of a person skilled in the art, is provided to drive the load-bearing structure (31) to slide along the guides (32).

The suspension structure (40) with which the gripping means (20) is associated, is associated with the load-bearing structure (31) in a slidable way along a second horizontal direction (X) perpendicular to the first horizontal direction (Y). Preferably, the transversal upper part (31b) is provided with guides and motor means structured to allow the sliding of the suspension structure (40) along the second horizontal direction (X), for a sufficient stroke to reach the modular frames (10) stored. For that purpose, the suspension structure (40) comprises an attaching portion (43), slidably associated with the transversal upper part (31b) of the load-bearing structure (31). The pantograph (41) and the motor means of the pantograph (41) are preferably associated with the attaching portion (43). The movement of a modular frame (10) and/or of an internal frame (13) can take place in the following ways.

For a collecting operation, the gripping means (20) is positioned above the modular frame (10) and the internal frame (13) to be collected. The positioning of the gripping means (20) takes place through a combination of movements of the load-bearing structure (31) along its own guides (32) and movements of the suspension structure (40) along the transversal upper part (31b) of the load-bearing structure (31). After reaching the position above the object to be collected, the gripping means (20) descends downwards by means of the suspension structure (40), i.e. by means of the extension of the pantograph (41). After reaching the correct position for coupling the modular frame (10) and the internal frame (13), the first coupling element (21) may be driven for collecting the internal frame (13) only, or the second coupling element (22,23) may be driven for collecting a modular frame (10) without the internal frame (13), or all the coupling elements (21,22,23) may be driven for collecting the modular frame (10) with which the internal frame (13) will also be lifted. Once the object to be collected has been coupled, an inverse sequence of the movements described above allows the object to be brought into a desired position. Also the depositing of an object inside the store can take place substantially according to the methods described above.

The storage system according to the present invention allows notable progress to be made with respect to the current state of the art.

The use of vertically stackable modular frames allows a store to be created without the need for further containment or support structures for the items to be stored. This implies a notable reduction in system costs. Furthermore, the possibility to form vertical piles by means of modular frames allows the necessary storage space to be notably reduced.

The use of internal frames, structured to allow the support of one or more sheets in an inclined position with respect to the vertical or substantially vertical, allows sheet-shaped objects to be stored in a position that notably reduces the necessary dimensions. Furthermore, the possibility to remove the internal frames from the modular frames increases the movement and positioning flexibility of the stored objects.

A further advantage comes from the particular conformation of the gripping means, which makes them very light, while allowing the effective coupling of the modular frames and the internal frames. The conformation of the gripping means further allows the use of a very light suspension structure that is simple to move, particularly in the preferred embodiment comprising a pantograph.

## Claims

1. A storage system, comprising:
a plurality of modular frames (10), intended to contain a determined number of items, which can be vertically stacked on top of one another;
gripping means (20), movable along a vertical direction between an upper position and a lower position and structured to be able to grasp the modular frames (10);
translating means (30), provided to move the gripping means (20) on a horizontal plane;
wherein each modular frame (10) comprises a bottom portion (11) and at least two lateral walls (12) opposite one another;
wherein each lateral wall (12) comprises an upper portion (12a) that can be coupled by the gripping means (20);
**characterised in that**
each modular frame (10) comprises an internal frame (13), structured to allow the support of at least one sheet (L) in an inclined position with respect to the vertical;
**in that** each internal frame (13) can be removed from its own modular frame (10); **in that** each internal frame (13) comprises: a base (14), structured to allow one or more sheets (L) to rest thereon; at least one support wall (15), arranged with an inclined orientation with respect to the vertical;
**in that** the support wall (15) comprises an upper portion (16) that can be coupled by the gripping means (20);
and **in that** the gripping means (20) comprises: a first coupling element (21), structured to couple an upper portion (16) of an internal frame (13) of a modular frame (10); a second coupling element (22,23), structured to couple an upper portion (12a) of two lateral walls (12) of a modular frame (10).

2. The system according to claim 1, wherein the modular frames (10) are provided with stacking connectors that prevent movements in the horizontal direction between the modular frames (10).

3. The system according to claim 1, wherein the first and the second coupling element (21,22,23) can be driven independently from one another between a coupling configuration and a release configuration.

4. The system according to claim 1, wherein the first and the second coupling element (21,22,23) are associated with a suspension structure (40) movable along a vertical direction.

5. The system according to claim 4, wherein the suspension structure (40) may drive the first and the second coupling element (21,22,23) in rotation about a vertical axis.

6. The structure according to claim 1, wherein the translating means (30) comprises a load-bearing structure (31) movable along a first horizontal direction (Y).

7. The system according to claim 6, wherein the translating means (30) comprises a suspension structure (40) with which the gripping means (20) is associated, said suspension structure (40) being associated with the load-bearing structure (31) in a slidable way along a second horizontal direction (X) perpendicular to the first horizontal direction (Y).

8. A modular frame for a storage system according to any of the preceding claims, comprising a bottom portion (11) and at least two lateral walls (12) opposite one another, wherein it comprises stacking connectors that allow the modular frame (10) to be stacked with the modular frame (10) above and/or with a modular frame (10) below and that prevent movements in the horizontal direction between the stacked modular frames (10);
and whereby it comprises an internal frame (13), structured to allow the support of at least one sheet (L) in an inclined position with respect to the vertical, which comprises: a base (14), structured to allow one or more sheets (L) to rest thereon, and at least one support wall (15), arranged with an inclined orientation with respect to the vertical, wherein the internal frame (13) can be removed from the modular frame (10).

## Patentansprüche

1. Speichersystem, umfassend:
eine Vielzahl an modularen Rahmen (10), die eine bestimmte Anzahl von Gegenständen enthalten sollen, die vertikal übereinander gestapelt werden können;
Greifmittel (20), die entlang einer vertikalen Richtung zwischen einer oberen Position und einer unteren Position beweglich und so strukturiert sind, dass sie die modularen Rahmen (10) erfassen können;
Verschiebungsmittel (30), die vorgesehen sind, um die Greifmittel (20) auf einer horizontalen Ebene zu bewegen;
wobei ein jeder modulare Rahmen (10) einen Bodenabschnitt (11) und mindestens zwei einander gegenüberliegende Seitenwände (12) umfasst;
wobei eine jede Seitenwand (12) einen oberen Abschnitt (12a) umfasst, der durch die Greifmittel (20) gekoppelt werden kann;
**dadurch gekennzeichnet, dass** ein jeder modulare Rahmen (10) einen inneren Rahmen (13) umfasst, der so strukturiert ist, dass mindestens eine Platte (L) in einer in Bezug auf die Vertikale geneigten Position abgestützt werden kann;
dadurch, dass ein jeder innere Rahmen (13) aus seinem eigenen modularen Rahmen (10) entfernt werden kann, dadurch, dass ein jeder innere Rahmen (13) umfasst: eine Basis (14), die so strukturiert ist, dass eine oder mehrere Platten (L) darauf liegen können; mindestens eine Stützwand (15), die mit einer geneigten Ausrichtung in Bezug auf die Vertikale angeordnet ist;
dadurch, dass die Stützwand (15) einen oberen Abschnitt (16) umfasst, der durch die Greifmittel (20) gekoppelt werden kann;
und dadurch, dass die Greifmittel (20) umfassen: ein erstes Kopplungselement (21), das so strukturiert ist, dass es einen oberen Abschnitt (16) eines inneren Rahmens (13) eines modularen Rahmens (10) koppelt; ein zweites Kopplungselement (22, 23), das so strukturiert ist, dass es einen oberen Abschnitt (12a) von zwei Seitenwänden (12) eines modularen Rahmens (10) koppelt.

2. System nach Anspruch 1, wobei die modularen Rahmen (10) mit Stapelverbindern versehen sind, die Bewegungen in horizontaler Richtung unter den modularen Rahmen (10) verhindern.

3. System nach Anspruch 1, wobei das erste und das zweite Kopplungselement (21, 22, 23) unabhängig voneinander zwischen einer Kopplungskonfiguration und einer Freigabekonfiguration angetrieben werden können.

4. System nach Anspruch 1, wobei das erste und das zweite Kopplungselement (21, 22, 23) mit einer Aufhängungsstruktur (40) assoziiert sind, die entlang einer vertikalen Richtung beweglich ist.

5. System nach Anspruch 4, wobei die Aufhängungsstruktur (40) das erste und das zweite Kopplungselement (21, 22, 23) in Rotation um eine vertikale Achse antreiben kann.

6. Struktur nach Anspruch 1, wobei die Verschiebungsmittel (30) eine lasttragende Struktur (31) umfassen, die entlang einer ersten horizontalen Richtung (Y) beweglich ist.

7. System nach Anspruch 6, wobei die Verschiebungsmittel (30) eine Aufhängungsstruktur (40) umfassen, mit der die Greifmittel (20) assoziiert sind, wobei die Aufhängungsstruktur (40) mit der lasttragenden Struktur (31) entlang einer zweiten horizontalen Richtung (X) senkrecht zur ersten horizontalen Richtung (Y) verschiebbar assoziiert ist.

8. Modularer Rahmen für ein Speichersystem nach einem der vorhergehenden Ansprüche, umfassend einen Bodenabschnitt (11) und mindestens zwei einander gegenüberliegende Seitenwände (12), wobei er Stapelverbinder umfasst, die es ermöglichen, dass der modulare Rahmen (10) mit dem modularen Rahmen (10) oben und/oder mit einem modularen Rahmen (10) unten gestapelt wird und die Bewegungen in horizontaler Richtung unter den gestapelten modularen Rahmen (10) verhindern;
und wobei er einen inneren Rahmen (13) umfasst, der so strukturiert ist, dass mindestens eine Platte (L) in einer geneigten Position in Bezug auf die Vertikale abgestützt werden kann, der umfasst: eine Basis (14), die so strukturiert ist, dass eine oder mehrere Platten (L) darauf liegen können, und mindestens eine Stützwand (15), die mit einer geneigten Ausrichtung in Bezug auf die Vertikale angeordnet ist, wobei der innere Rahmen (13) aus dem modularen Rahmen (10) entfernt werden kann.

## Revendications

1. Système de stockage, comprenant :
une pluralité de cadres modulaires (10), destinés à contenir un nombre déterminé d'articles, qui peuvent être empilés verticalement les uns sur les autres ;
des moyens de préhension (20), mobiles dans une direction verticale entre une position supérieure et une position inférieure et structurés de manière à pouvoir saisir les cadres modulaires (10) ;
des moyens de translation (30), prévus pour déplacer les moyens de préhension (20) sur un plan horizontal ;
dans lequel chaque cadre modulaire (10) comprend une partie de fond (11) et au moins deux parois latérales (12) opposées l'une à l'autre ;
dans lequel chaque paroi latérale (12) comprend une partie supérieure (12a) qui peut être couplée par les moyens de préhension (20) ;
**caractérisé en ce que** chaque cadre modulaire (10) comprend un cadre interne (13), structuré pour permettre le support d'au moins une feuille (L) dans une position inclinée par rapport à la verticale ;
**en ce que** chaque cadre interne (13) peut être retiré de son propre cadre modulaire (10) ; **en ce que** chaque cadre interne (13) comprend : une base (14), structurée pour permettre à une ou plusieurs feuilles (L) de reposer sur celle-ci ; au moins une paroi de support (15), disposée avec une orientation inclinée par rapport à la verticale ;
**en ce que** la paroi de support (15) comprend une partie supérieure (16) qui peut être couplée par les moyens de préhension (20) ;
et **en ce que** les moyens de préhension (20) comprennent : un premier élément de couplage (21), structuré pour coupler une partie supérieure (16) d'un cadre interne (13) d'un cadre modulaire (10) ; un deuxième élément de couplage (22, 23), structuré pour coupler une partie supérieure (12a) de deux parois latérales (12) d'un cadre modulaire (10).

2. Système selon la revendication 1, dans lequel les cadres modulaires (10) sont pourvus de connecteurs d'empilage qui empêchent les mouvements dans la direction horizontale entre les cadres modulaires (10).

3. Système selon la revendication 1, dans lequel le premier et le deuxième élément de couplage (21, 22, 23) peuvent être entraînés indépendamment l'un de l'autre entre une configuration de couplage et une configuration de relâchement.

4. Système selon la revendication 1, dans lequel le premier et le deuxième élément de couplage (21, 22, 23) sont associés à une structure de suspension (40) mobile dans une direction verticale.

5. Système selon la revendication 4, dans lequel la structure de suspension (40) peut entraîner le premier et le deuxième élément de couplage (21, 22, 23) en rotation autour d'un axe vertical.

6. Structure selon la revendication 1, dans laquelle les moyens de translation (30) comprennent une structure porteuse (31) mobile dans une première direction horizontale (Y).

7. Système selon la revendication 6, dans lequel les moyens de translation (30) comprennent une structure de suspension (40) à laquelle sont associés les moyens de préhension (20), ladite structure de suspension (40) étant associée à la structure porteuse (31) de manière coulissante dans une deuxième direction horizontale (X) perpendiculaire à la première direction horizontale (Y).

8. Cadre modulaire pour un système de stockage selon l'une quelconque des revendications précédentes, comprenant une partie de fond (11) et au moins deux parois latérales (12) opposées l'une à l'autre, dans lequel il comprend des connecteurs d'empilage qui permettent au cadre modulaire (10) d'être empilé avec le cadre modulaire (10) au-dessus et/ou avec un cadre modulaire (10) en dessous et qui empêchent les mouvements dans la direction horizontale entre les cadres modulaires (10) empilés ;
et comprenant un cadre interne (13), structuré pour permettre le support d'au moins une feuille (L) dans une position inclinée par rapport à la verticale, qui comprend : une base (14), structurée pour permettre à une ou plusieurs feuilles (L) de reposer sur celle-ci, et au moins une paroi de support (15), disposée avec une orientation inclinée par rapport à la verticale, dans lequel le cadre interne (13) peut être retiré du cadre modulaire (10).
